# EUROPEAN PATENT APPLICATION

(11) **EP 2 735 814 A1**
(43) Date of publication of application: **28.05.2014**
(21) Application number: 12194319.5
(22) Date of filing: 27.11.2012
(51) Int. Cl.: F24J 2/05, F24J 2/34, F24J 2/46

(54) **Improved collector and storage apparatus**

(71) Applicant: Yrenew Solar LTD, Chester Cheshire CH1 2DD (GB)
(72) Inventor: Young, Edward Andrew, Southampton, Hampshire SO17 2HH (GB)
(74) Representative: D'Halleweyn, Nele Veerle Trees Gertrudis

(57) **Abstract**

Collector and storage apparatus comprising a frame and a number of collector tubes for storing a fluid to be heated, wherein the number of collector tubes (110; 210; 310) are mounted in an axial direction in the frame between a first section (101; 201; 301) and an opposite second section (102; 202; 302) of the frame, which first and second sections are mechanically connected by at least two connectors (103,104; 203,204,205) extending in the axial direction, each collector tube having a first end and a second open end, wherein a sealing piece (108; 208; 308) is slidingly mounted in the second open end of each collector tube and wherein said sealing piece is coupled to the second section.

## Description

### Technical field

The field of the invention is related to a collector and storage apparatus, and in particular an apparatus comprising a frame and a number of collector tubes for storing a pressurized fluid to be heated.

### Background

Solar hot water systems using glass Sydney collector tubes are generally composed of a collector and a separate tank. Some systems however use the glass tubes also to store water. The glass tubes can be the sole hot water storage, see PCT/EP2010/054902 in the name of the Applicant, or part of a tank connected directly to the exit of the tubes.

Glass is a cheap material and there is a plentiful supply of the raw materials. Having pressurised water in the tubes has the advantage of giving a good output flow of water for the user. In addition the boiling temperature of the water is higher at higher pressures so water can be stored at higher temperatures without using a relief valve that loses the stored energy as vapour to ambient and causes the undesirable deposition of salts in the storage volume. Although the yield stress of glass is high, glass is a brittle material and will not sustain significant strain before failure. An isostatic pressure from the water can be sustained by glass as the yield strength is high and there is no strain. However any forces that create a strain on the glass tube will easily result in failure. Such strains are most likely to occur from thermal expansion and contraction of a supporting structure that couples the plumbing and sealing component to the glass tubes. The strains could also result from deformation of the outer frame structure if it is not sufficiently rigid.

### Summary

The object of the invention is to provide an improved collector and storage apparatus where the collector tubes suffer minimal strains.

To that end, in an embodiment of the invention, a number of collector tubes, typically a plurality of collector tubes, are mounted in an axial direction in the frame between a first section and an opposite second section of the frame. The first and second sections are mechanically connected by at least two connectors extending in the axial direction. Each collector tube has a first end, typically a closed end, and a second open end, and a sealing piece is slidingly mounted in the second open end of each collector tube. The sealing piece is coupled or fixed to the second section.

Such a frame will be able to hold, with minimal risks of breakage, a series of one or more collector tubes and can be built with a rigid exterior section that undergoes minimum thermal fluctuation. The fluid pressure in the tubes creates an axial force on the slidingly mounted sealing pieces, which will act to move the sealing piece out of the tubes. By coupling the sealing pieces to the second section of the frame, those axial forces can be adequately dealt with. It can be avoided that the sealing piece flips or moves significantly such that there is minimal stress on the tubes, and leakage of the working fluid is prevented.

According to a possible embodiment, the sealing piece is fixed to the second section using an elongate part extending in the axial direction and having a cross section with an area, which is at least 10 times smaller and more preferably at least 50 times smaller than the area of a cross section of the sealing piece. Preferably the elongate parts are made from metal.

The semi-rigid elongate parts are of a smaller area to sustain a minimum heat loss requirement from the working fluid to the exterior and either entirely or partially lie within an insulated manifold, preferably keeping the manifold thermal losses below 0.2 W/m² K and most preferably below 0.02 W/m² K. Moreover, the elongate components are slightly flexible in the radial direction of the tubes so that they will not significantly stress the glass tubes during thermal expansion and contraction.

More in particular the rigid frame that undergoes minimum thermal fluctuation is advantageously connected to a set of smaller diameter components penetrating into an insulated manifold, and fixed to a set of sealing pieces.

The elongate parts are preferably hollow metal tubes. Such tubes have the advantage that the area of the cross section can be chosen to be very small in order to minimise heat losses.

Further, the elongate parts extend preferably in the centre of the sealing pieces, so that the forces of the fluid in the tubes are taken up correctly.

According to a preferred embodiment the sealing piece comprises a metal flange and an 0-ring extending between the metal flange and an inner wall of the collector tube. If an elongate metal part is used as described above, then this part is preferably attached to the metal flange.

According to another possible embodiment a first support part is fixed to the second section or is an integral part of the second section, and the sealing piece is fixed to or coupled with a second support part which is mechanically coupled with the first support part. The first support part may also be integrally formed with the second support part. The first support part may comprise a hollow cylindrical part fitting around a tube end, and the second support part may have a first end adapted to extend in the tube end and a second end extending out of the tube in the hollow cylindrical part. The second end may be attached to the hollow cylindrical part, or the hollow cylindrical part may have a partly closed top end forming an abutment for the second support part. The second support part is preferably made of a plastic material, such as nylon, in order to avoid thermal losses through this part. The first part may be made of a plastic material such as nylon, or of metal. Using such a first and second support part will further allow to protect the sealing function (e.g. the flange with the 0-ring) from contamination by the insulation material surrounding the inlet and outlet conduits in the manifold. The first and second support parts may also allow for the removal and replacement of collector tubes with minimal time and effort.

According to another aspect of the invention there is provided a collector and storage apparatus with a number of collector tubes mounted in a frame which further comprises a third section between the first section and the second section, wherein the third section is provided with a guidance part for each collector tube for slidingly guiding an end of the collector tube. Each sealing piece may further be fixed to or coupled with a support part which extends out of the collector tube and is also guided by the guidance part. Typically the guidance part may be in the shape of a hollow cylindrical part forming a bearing for a collector tube.

The guidance part and the support part may also act to separate the sealing to the inner wall of a tube, e.g. realised by a metal flange with 0-ring, from the insulation material in the manifold box which is defined between the second section and the third section. With the insulation material in the manifold box being separate from the actual seal, the tube can be removed and replaced without contaminating the sealing with insulation material from the manifold box. The support part preferably has a sufficiently long thermal path from the manifold box to the actual seal, and the guidance part is preferably concentric around the tube so that it has minimal thermal expansion in the radial tube direction.

According to a preferred embodiment an inlet conduit and an outlet conduit extend, typically in the axial direction, through the sealing piece. The inlet and outlet conduits of the collector tubes may be connected in parallel or in series, and are preferably surrounded by insulation material.

According to another aspect of the invention there is provided a collector and storage apparatus comprising a frame and a number of tubes, wherein the frame comprises an exterior part with a top section, a bottom section and two side sections connecting the top and bottom sections, as well as at least one tensioning connector, preferably in the form of a rod or cable, extending between the top and bottom section.

Although the rigidity of the top and bottom sections can be ensured by their own rigidity, this may incur significant weight to the frame. By using one or more tensioning connectors the total frame weight can be reduced, and in particular a lighter top and bottom section can be used. The tensioning connectors or tensile sections can be light, and could provided as for instance a rod or cable.

The tensioning connectors preferably extend in the axial direction of the tubes, in a plane defined by the axes of the number of tubes, so that they can withstand forces by the pressurized fluid in the tubes on the sealing pieces. The at least one tensioning connector preferably has a diameter which is substantially smaller, e.g. at least 5 times smaller, than the diameter of a tube such that inlet and outlet conduits to/from the number of tubes can extend above and/or below a tensioning connector.

According to another aspect of the invention there is provided a collector and storage apparatus with a number of tubes mounted in a frame, wherein the first end of each collector tube is closed and is held in a cup which is fixed to a bottom section of the frame. The cup may be provided with a rubber cushion extending between the cup and the first closed end. Preferably the cups are fixed concentric with the tube axis to minimise any bending force on the supporting structure and hence on the glass tubes, so that a light frame structure is obtained.

The tubes may consist of double walled tubes or single walled tubes, and are preferably manufactured from glass.

Typically each collector tube stores a fluid under pressure, e.g. water. Although the working fluid of current solar hot water systems is mostly water, the advent of new materials for thermal storage could also present a new working fluid with superior thermal storage energy. The principles applied in this patent apply to any pressurised working fluid, not only water. The working fluid may be water or another fluid and undergoes heating and cooling from a heating source either exterior to the tubes, such as solar irradiation, or interior to the tubes, such as an electric band heater or is heated before entering the tubes.

The accompanying drawings are used to illustrate presently preferred non-limiting exemplary embodiments of the present invention. The above and other advantages of features and objects of the invention will become more apparent and the invention will be better understood from the following detailed description when read in conjunction with the accompanying drawings in which:
Figure 1A illustrates a first embodiment of a collector and storage apparatus of the invention;
Figure 1B illustrates a schematic axial section of the mounting of the open end of a tube for the embodiment of figure 1A;
Figure 1C illustrates a schematic perspective view of the mounting of a tube of the embodiment of figure 1A;
Figure 1D illustrates the forces from the fluid in a schematic axial section of a mounted tube for the embodiment of figure 1A;
Figure 2A illustrates a second embodiment of a collector and storage apparatus of the invention;
Figure 2B illustrates a schematic axial section of the mounting of the open end of a tube for the embodiment of figure 2A;
Figure 3A illustrates a third embodiment of a collector and storage apparatus of the invention; and
Figure 3B illustrates a schematic axial section of the mounting of the open end of a tube for the embodiment of figure 3A.

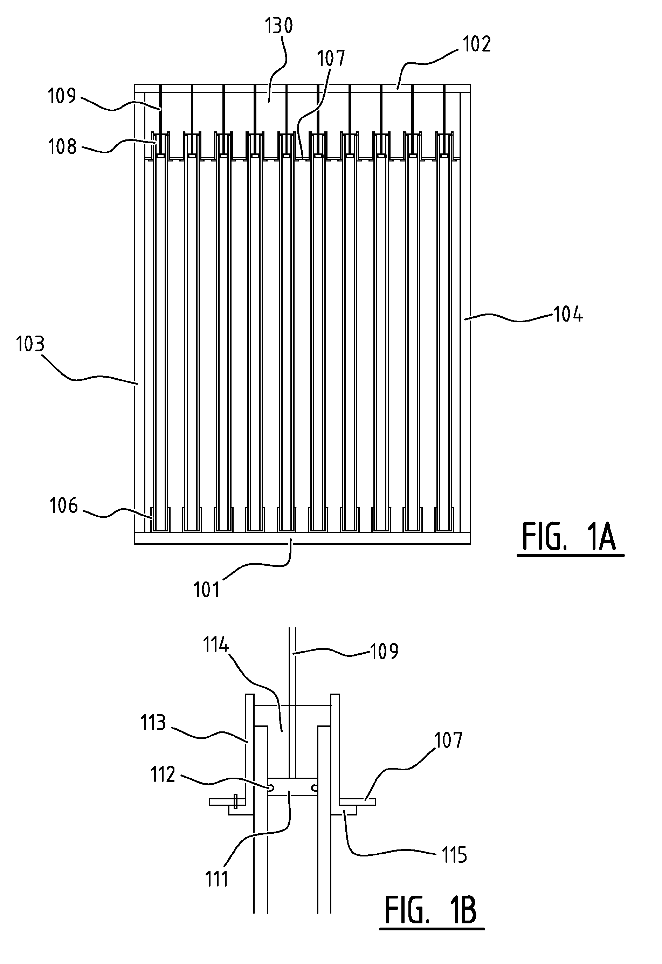

Figures 1A-1D illustrate a first embodiment of a collector and storage apparatus comprising a frame and a number of collector tubes 110 for storing a pressurized fluid to be heated. The collector tubes 110 are mounted in an axial direction in the frame between a bottom section 101 and a top section 102. The top and bottom sections are mechanically connected by two side sections 103, 104, so that a rigid outer part is formed. Each collector tube 110 has a closed end attached to the bottom section and a second open end facing the top section. The frame comprises a third section 107 between the bottom section 101 and the top section 102, so that a manifold box is defined between the third section 107 and the top section 102. For each collector tube 110 a guidance part 113 in the form of a hollow cylindrical part is fixed to or integrally formed with the third section for slidingly guiding an end of the collector tube.

A sealing piece 108 is slidingly mounted in the second open end of each collector tube 110. The sealing piece comprises a metal flange 111 and an 0-ring 112 extending between the metal flange 111 and an inner wall of a collector tube 110. The sealing piece 108 is fixed to a support part 114 which extends out of the collector tube and is guided by the guidance part 113.

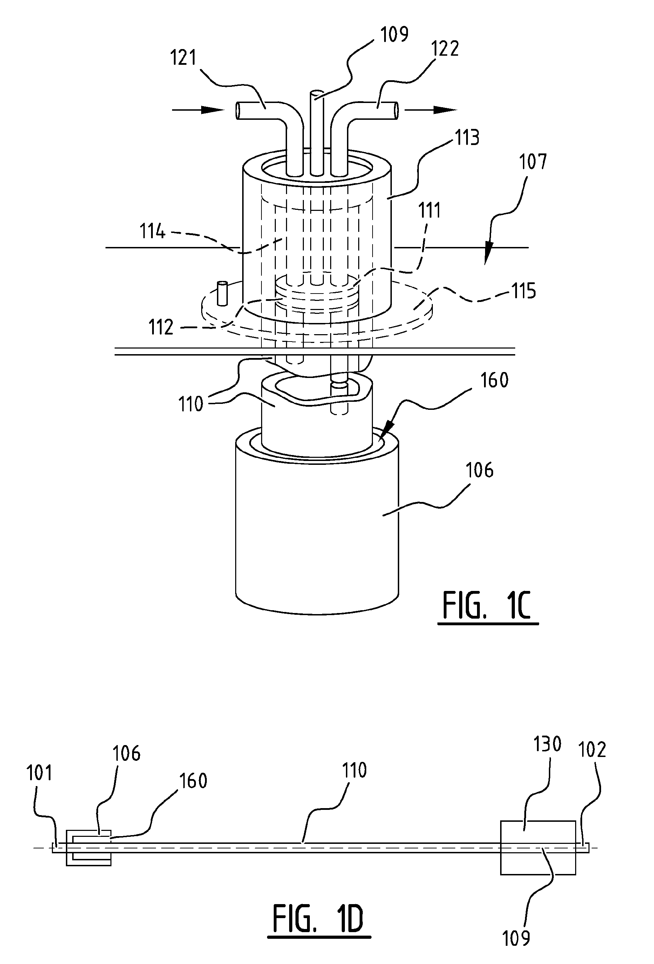

An inlet conduit 121 and an outlet conduit 122 extend through the sealing piece 108, see figure 1C. These conduits have been omitted in figures 1A, 1B and 1D. The conduits may be linked in series or parallel with the plumbing to allow the fluid to enter and exit the tubes. The fluid inlet and outlet linkage between tubes is in good thermal contact with the fluid and consequently undergoes significant thermal expansion. The conduits may have significant length, and hence significant thermal expansion in the tube radial direction. To mitigate stress on the glass tubes flexible sections such as bellows (not illustrated) may be used on each tube.

The metal flange 111 of the sealing piece 108 is fixed to the top section using an elongate part 109 in the form of a hollow tube extending in the axial direction and having a cross section with an area, which is at least 10 times smaller and preferably at least 50 times smaller than the area of a cross section of the metal flange 111. In other words, the flanges 111 are connected to the top frame section by small diameter elongate parts, so that the total manifold thermal requirements may be fulfilled. For example, the hollow tube 109 could be a stainless steel tube of diameter 9 mm with 1 mm wall thickness and length 200 mm. The connection between the flange 111 and the top frame section 102 is preferably sufficiently rigid in compression to prevent the flange 111 from moving more than 1 mm, and to prevent the flange from twisting by more than 5 degrees. The stainless steel tube being long in length and small in diameter, will only undergo significant thermal expansion in the plane of the tube axes, and not in the tube radial direction (preferably < 100 microns, and most preferably < 10 microns).

The guidance part 113 and the support part 114 may further function to separate the sealing by the 0-ring 112 from the insulation material 130 in the manifold box. With the insulation 130 separate from the seal 112, the glass tube can be removed and replaced without contaminating the sealing material 112 with insulation material 130. The support part 114 has a sufficiently long thermal path from the manifold box to the sealing flange 111. It is further noted that there may be a small clearance between the support part 114 and the inner wall of the tube 110 in order to limit any thermal stresses in the radial direction.

The first end of each collector tube is closed and held in a cup 106 which is fixed to the bottom section 101. The cup 106 is provided with a rubber cushion 160 extending between the cup and the first closed end.

Each collector tube is preferably a double walled glass tube storing a fluid under pressure, typically water.

Figure 1D illustrates the forces that are exerted on the frame by the pressurized working fluid in the tubes 110. For clarity reasons the guidance part, support part and sealing piece components have been omitted. As illustrated, the force - which may be considerable, for example at 3 bar pressure reaching 2600 N - is oriented in the axial direction and can be taken up by the frame through elongate parts 109 and cups 106. However, the semi rigid elongate parts 109 are not rigid in a plane that is undergoing thermal expansion which is generally in the tube radial direction. In that way breakage of the tubes due to thermal expansion effects can be avoided.

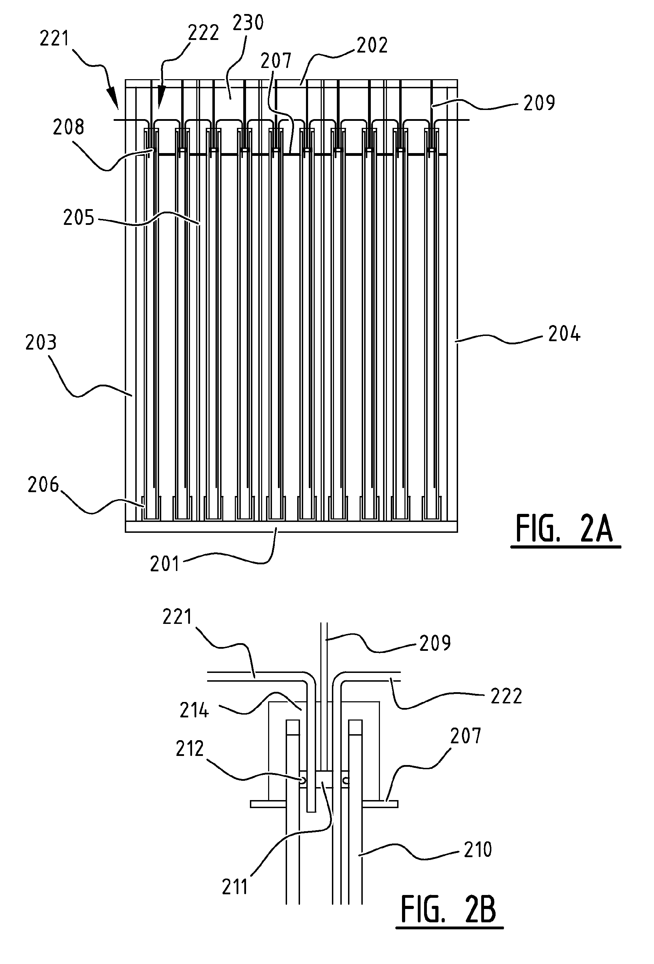

Figures 2A and 2B illustrate a second embodiment of a collector and storage apparatus comprising a frame and a number of collector tubes 210 for storing a pressurized fluid to be heated. The collector tubes 210 are mounted in an axial direction in the frame between a bottom section 201 and a top section 202. The top and bottom sections are mechanically connected by two side sections 203, 204. Each collector tube 210 has a closed end attached to the bottom section 201 and a second open end facing the top section 202. The frame comprises a third section 207 so that a manifold box is defined between the third section 207 and the top section 202. For each collector tube 210 a recess is arranged in the third section for guiding an end of the collector tube 210.

A sealing piece 208 is slidingly mounted in the second open end of each collector tube 210. The sealing piece comprises a metal flange 211 and an 0-ring 212 extending between the metal flange 211 and an inner wall of a collector tube 210. The sealing piece 208 is fixed to a support part 214 which extends out of the collector tube and prevents that insulation material 230 can contaminate the sealing.

As for the first embodiment, there are provided inlet and outlet conduits 221, 222 which extend through the sealing piece 208.

As in the first embodiment, the metal flange 211 of the sealing piece 208 is fixed to the top section using an elongate part 209, preferably in the form of a hollow tube extending in the axial direction. Also here the first end of each collector tube is closed and held in a cup 206 which is fixed to the bottom section 201. Further, each collector tube 210 is preferably a double walled glass tube storing a fluid under pressure, typically water.

In the second embodiment the frame is provided with four tensioning connectors 205, preferably in the form of a rod or cable, extending between the top and bottom section. These tensioning connectors have a diameter which is substantially smaller than the diameter of the collector tube such that inlet and outlet conduits 221, 222 to/from the number of collector tubes can extend above and/or below the tensioning connectors 205. By using such tensioning connectors 205 it will be possible to use lighter top and bottom sections. This is a significant advantage since the frame is to be sold commercially as a thermal storage unit and is typically used on roof tops. The skilled person understands that more or less tensioning connectors, or no tensioning connectors, may be used depending on the number of tubes, the desired properties, etc.

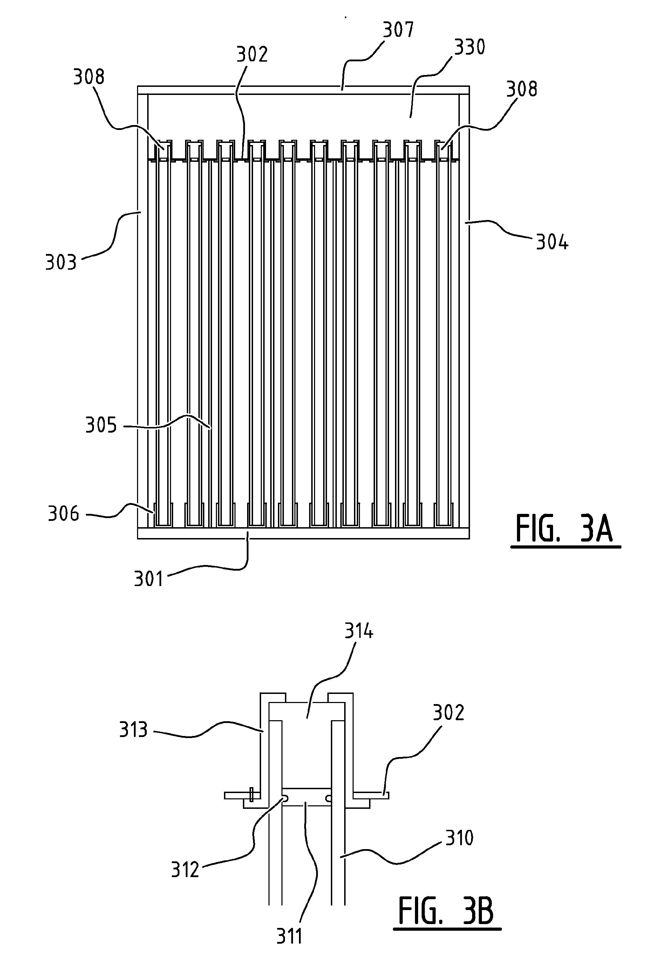

Figures 3A and 3B illustrate a third embodiment of a collector and storage apparatus comprising a frame and a number of collector tubes 310 for storing a pressurized fluid to be heated. The collector tubes 310 are mounted in an axial direction in the frame between a first section 301 and a second section 302. The first and second sections are mechanically connected by two side sections 303, 304. Each collector tube 310 has a closed end attached to the first section 301 and a second open end facing the second section 302. The frame comprises a third section 307 so that a manifold box is defined between the third section 307 and the second section 302. The second section is provided for each tube with a first support part 313 with the shape of a hollow cylindrical part adapted to surround the tube 310. The first support part 313 may be made of metal or of plastic. It may be a separate part fixed to the second section 302 or it may be integrally formed with the second section.

A sealing piece 308 is slidingly mounted in the second open end of each collector tube 310. The sealing piece comprises a metal flange 311 and an 0-ring 312. The sealing piece 308 is fixed to a second support part 314 which is coupled with the first support part 313. The second support part 314 is typically made of a plastic material, such as nylon. In the illustrated example the first support part 313 has a partly closed top in order to form an abutment surface for the second support part 314. According to another embodiment the first support part 313 could be fixed to the second support part 314, and if they are both made of plastic they could be formed as a single piece. This mechanical support 313, 314 can be the sole support, replacing the guides and elongate parts in the first and second embodiment. It is for assembly purposes that this mechanical support is typically made of two parts 313, 314: one connected to the flange 311 sliding into the other connected to the second section 302. This second part 314, to reduce costs further, can be a single body with the flange 311. This single body typically will be made of metal, and is preferably shaped in such a way that the thermal losses are limited. For example, this body could be a tube part with a closed bottom end, or could be a frame-like structure with a radial cross section having a small area.

Although not illustrated, as for the first and second embodiment, there are provided inlet and outlet conduits which extend through the sealing pieces 308. Also here the first end of each collector tube is closed and held in a cup 306 which is fixed to the first section 301. Further, each collector tube 310 is preferably a double walled glass tube storing a fluid under pressure, typically water. Like in the second embodiment the frame is provided with four tensioning connectors 305, preferably in the form of a rod or cable, extending between the first and second section.

Whilst the principles of the invention have been set out above in connection with specific embodiments, it is to be understood that this description is merely made by way of example and not as a limitation of the scope of protection which is determined by the appended claims.

## Claims

1. Collector and storage apparatus comprising a frame and a number of collector tubes for storing a fluid to be heated, wherein the number of collector tubes (110; 210; 310) are mounted in an axial direction in the frame between a first section (101; 201; 301) and an opposite second section (102; 202; 302) of the frame, which first and second sections are mechanically connected by at least two connectors (103,104; 203,204,205) extending in the axial direction, each collector tube having a first end and a second open end, **characterized in that** a sealing piece (108; 208; 308) is slidingly mounted in the second open end of each collector tube and **in that** said sealing piece is coupled to the second section.

2. Collector and storage apparatus of claim 1, wherein said sealing piece (108; 208) is fixed to said second section.

3. Collector and storage apparatus of claim 2, wherein said sealing piece is fixed to the second section using an elongate part (109; 209) extending in the axial direction and having a cross section with an area, which is at least 10 times smaller and preferably at least 50 times smaller than the area of a cross section of the sealing piece (108; 208).

4. Collector and storage apparatus of claim 3, wherein said elongate part (109; 209) is a hollow metal tube.

5. Collector and storage apparatus of claim 2 or 3, wherein said elongate part extends in the centre of the sealing piece.

6. Collector and storage apparatus of any one of the previous claims, wherein said sealing piece comprises a metal flange (111; 211; 311) and an 0-ring (112; 212; 312) extends between said metal flange and an inner wall of each collector tube.

7. Collector and storage apparatus of any one of the previous claims, wherein the second section is provided with a first support part (313) for each collector tube, and the sealing piece is coupled or fixed to a second support part (314) which is coupled with or fixed to said first support part.

8. Collector and storage apparatus of claim 7, wherein said first support part (313) comprises a hollow cylindrical part adapted to surround a tube end, and said second support part (314) extends in the tube.

9. Collector and storage apparatus of any one of the previous claims, wherein said frame further comprises a third section (107; 207) between said first section (101; 201) and said second section (102; 202), and wherein said third section is provided with a guidance part (113; 213) for each collector tube for slidingly guiding an end of said collector tube.

10. Collector and storage apparatus of claim 9, wherein each sealing piece is fixed to or coupled with a support part (114; 214) which extends out of the collector tube and is guided by the guidance part.

11. Collector and storage apparatus of claim 9 or 10, wherein each guidance part is a hollow cylindrical part forming a bearing for a collector tube.

12. Collector and storage apparatus of any one of the previous claims, wherein for each collector tube an inlet conduit and an outlet conduit extend through the sealing piece, wherein the inlet and outlet conduits are preferably surrounded by insulation material.

13. Collector and storage apparatus of any one of the previous claims, wherein said at least two connectors comprise two side sections (103,104; 203,204; 303,304) extending between opposite ends of the first and second section, as well as at least one tensioning connector (205; 305), preferably in the form of a rod or cable, extending between the first and second section;
wherein said at least one tensioning connector preferably has a diameter which is substantially smaller than the diameter of a collector tube such that inlet and outlet conduits to/from the number of collector tubes can extend above and/or below a tensioning connector.

14. Collector and storage apparatus of any one of the previous claims, wherein the first end of each collector tube is closed and held in a cup (106; 206; 306) which is fixed to the first section (101; 201; 301), wherein said cup is preferably provided with a rubber cushion (160) extending between the cup and the first closed end.

15. Collector and storage apparatus of any one of the previous claims, wherein each collector tube is a glass tube, preferably a double walled tube.
